# EUROPÄISCHE PATENTSCHRIFT

(11) **EP 0 585 771 B1**
(45) Veröffentlichungstag und Bekanntmachung des Hinweises auf die Patenterteilung: **23.10.1996**
(21) Anmeldenummer: 93113451.4
(22) Anmeldetag: 24.08.1993
(51) Int. Cl.: C08G 77/46

(54) **Polysiloxan-Polyoxyalkylen-Blockmischpolymerisat mit unterschiedlichen Polyoxyalkylenblöcken im durchschnittlichen Molekül**
Polysiloxane-polyoxyalkylene block copolymer containing different polyoxyalkylene blocks in the average molecule
Polymère segmenté de polysiloxane-polyoxyalkylène contenant des segments différents de polyoxyalkylène dans la molécule moyenne

(30) Priorität: 03.09.1992 DE 4229402
(43) Veröffentlichungstag der Anmeldung: 09.03.1994
(73) Patentinhaber: Th. Goldschmidt AG, D-45127 Essen (DE)
(72) Erfinder: Burkhart, Georg, Dr., D-45239 Essen (DE); Weier, Andreas, Dr., D-45289 Essen (DE); Langenhagen, Rolf-Dieter, D-45529 Hattingen (DE); Zellmer, Volker, Dr., D-46240 Bottrop (DE)

(56) Entgegenhaltungen:
- EP-A- 0 493 836

## Beschreibung

Die Erfindung betrifft Polysiloxan-Polyoxyälkylen-Blockmischpolymerisate mit unterschiedlichen Polyoxyalkylenblöcken im durchschnittlichen Molekül und deren Verwendung bei der Herstellung von Polyurethanschaumstoffen.

Bei der Herstellung von Polyurethanschaumstoffen werden dem Gemisch der Reaktionsprodukte Polysiloxan-Polyoxyalkylen-Blockmischpolymerisate zugesetzt, welche die Ausbildung eines gleichmäßigen Porengefüges ermöglichen und den gebildeten Schaum bis zur Beendigung der Reaktion stabilisieren. Jedoch sind nicht alle Polysiloxan-PolyoxyalkylenBlockmischpolymerisate in gleicher Weise geeignet. Um als PolyurethanSchaumstabilisatoren brauchbar zu sein, müssen die Polyoxyalkylenblöcke und der Polysiloxanblock der Blockmischpolymerisate in einem ausgewogenen Verhältnis vorliegen, wobei auch der Aufbau der beiden Blöcke von großer Bedeutung ist. Es gibt dabei für den Aufbau eines möglichst wirksamen Schaumstabilisators eine Vielzahl von Variablen sowohl für den Polyoxyalkylenblock wie für den Polysiloxanblock:

Der Polyoxyalkylenblock kann aus verschiedenen Oxyalkyleneinheiten, vornehmlich aus Oxyethylen-, Oxypropylen- und Oxybutyleneinheiten zusammengesetzt sein. Dabei kann das Gewichtsverhältnis dieser Einheiten zueinander sowie das Molgewicht des Polyoxyalkylenblockes variiert werden. Von Bedeutung ist auch die Endgruppe des Polyoxyalkylenblockes, die in bezug auf die Polyurethanbildung reaktiv (z.B. OHGruppe) oder inert (z.B. Alkoxy-Gruppe) sein kann. Der Polyoxyalkylenblock kann mit dem Polysiloxanblock durch eine hydrolytisch stabile C-Si-Bindung oder die hydrolytisch weniger stabile C-O-Si-Bindung verknüpft sein. Dabei können auch unterschiedliche Polyoxyalkylenblöcke an den Polysiloxanblock gebunden sein.

Der Polysiloxanblock kann in bezug auf Art und Anteil der Si-Einheiten variiert werden. Der Siloxanblock kann geradkettig oder verzweigt sein und unterschiedliches Molekulargewicht aufweisen. Die Polyoxyalkylenblöcke können end- und/oder seitenständig an den Polysiloxanblock gebunden sein.

Vorhersagen über Wirksamkeit eines Polysiloxan-Polyoxyalkylen-Blockmischpolymerisates als Schaumstabilisator können nur in gewissem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten stellt die Auffindung spezieller Variationsmöglichkeiten und entsprechender Blockmischpolymerisate eine fortschrittsraffende und somit erfinderische Leistung dar.

Polysiloxan-Polyoxyalkylen-Blockmischpolymerisate, welche im durchschnittlichen Molekül unterschiedliche Polyoxyalkylenreste aufweisen, sind bereits wiederholt beschrieben worden. Aus der großen Anzahl entsprechender Veröffentlichungen sollen stellvertretend die folgenden Schriften genannt werden:

DE-PS 15 70 647: Chlorpolysiloxanylsulfate werden mit Gemischen von Alkylenoxid-Addukten umgesetzt, welche aus
- 50 bis 95 OH-Äquivalentprozent: Polyalkylengylkolmonoethern, die aus Ethylenoxid- und Propylenoxideinheiten bestehen und einen Gehalt von 40 bis 70 Gew.-% Oxypropyleneinheiten und ein Molgewicht von 1000 bis 3000 aufweisen, deren Hydroxylgruppen vorzugsweise sekundär sind, und
- 5 bis 50 OH-Äquivalentprozent: Alkylenoxid-Addukten mehrwertiger Hydroxylverbindungen eines Molgewichtes von 130 bis 3500, deren Polyalkylenglykolkomponente aus Ethylenoxid- und/oder Propylenoxideinheiten bestehen und die ein OH-Äquivalentgewicht bis zu 1750 haben und deren Hydroxylgruppen vorzugsweise sekundär sind, bestehen und
wobei die Mengenverhältnisse so gewählt sind, daß auf ein Säureäquivalent des Chlorpolysiloxanylsulfates höchstens 1,4, vorzugsweise 1,05 bis 1,2 OH-Äquivalente kommen.

DE-PS 16 94 366: Es werden als Schaumstabilisatoren solche Polysiloxan-Polyoxyalkylen-Blockmischpolymerisate verwendet, deren Polysiloxanblock in an sich bekannter Weise aufgebaut ist, deren Polyoxyalkylenblock jedoch aus
- 25 bis 70 Gew.-%: eines Polyoxyalkylens mit einem durchschnittlichen Molekulargewicht 1600 bis 4000 und einem Ethylenoxidgehalt von 20 bis 100 Gew.-%, Rest Propylenoxid und gegebenenfalls höhere Alkylenoxide, und
- 30 bis 75 Gew.-%: eines Polyoxyalkylens mit einem durchschnittlichen Molekulargewicht von 400 bis 1200 und einem Ethylenoxidgehalt von 65 bis 100 Gew.-%, Rest Propylenoxid und gegebenenfalls höhere Alkylenoxide, besteht.

DE-OS 25 41 865: Die Polysiloxan-Polyoxyalkylen-Blockmischpolymerisate sind bezüglich ihrer Polyoxyalkylenblöcke so definiert, daß der eine Polyoxyalkylenblock ein mittleres Molgewicht von 900 bis 1300 hat und zu 30 bis 55 Gew.-% aus Ethylenoxid, Rest Propylenoxid, und der andere Polyoxyalkylenblock ein mittleres Molgewicht von 3800 bis 5000 hat und zu 30 bis 50 Gew.-% aus Ethylenoxid, Rest Propylenoxid besteht.

EP-OS 0 275 563: Das in dieser veröffentlichten europäischen Patentanmeldung beschriebene Blockmischpolymerisat umfaßt drei verschiedene Polyoxyalkylenblöcke, nämlich einen Block, welcher 20 bis 60 Gew.-% Oxyethyleneinheiten enthält, bei einem Molgewicht von 3000 bis 5500, einen weiteren Block mit 20 bis 60 Gew.-% Oxyethyleneinheiten und einem Molgewicht von 800 bis 2900 und einen dritten Block nur aus Polyoxypropyleneinheiten und einem Molgewicht von 130 bis 1200.

Der Erfindung liegt das technische Problem zugrunde, Polysiloxan-Polyoxyalkylen-Blockmischpolymerisate zu entwickeln, deren anwendungstechnische Eigenschaften weiter optimiert sind, wobei insbesondere angestrebt wurde, einen Stabilisator hoher Aktivität aufzufinden, der auch im unteren Raumgewichtsbereich flexible PUR-Schäume sehr guter Zellfeinheit herzustellen gestattet.

Diese Verbesserung der anwendungstechnischen Eigenschaften wurde bei solchen Polysiloxan-Polyoxyalkylen-Blockmischpolymerisaten gefunden, die erfindungsgemäß der folgenden allgemeinen, durchschnittlichen Formel entsprechen: 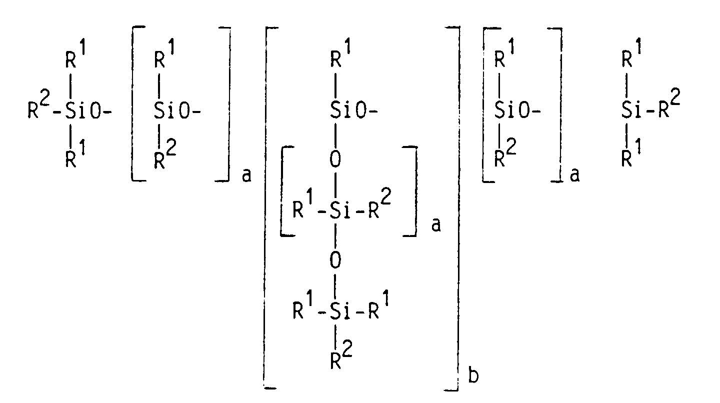 wobei
- R¹: ein Alkylrest mit 1 bis 4 Kohlenstoffatomen oder ein Phenylrest ist, jedoch mindestens 90 % der Reste R¹ Methylreste sind,
- R²: die Bedeutung des Restes R¹ oder des Restes -M-R³ hat, wobei
M ein zweiwertiger Rest der Formel

-R⁴ ₓO-

ist, in dem
R⁴ ein zweiwertiger Alkylenrest, der auch verzweigt sein kann, ist und
x einen Wert von 0 oder 1 hat,
R³ ein Gemisch von
(1) mindestens einem Polyoxyalkylenrest A und
(2) mindestens einem Polyoxyalkylenrest B und/oder
(3) mindestens einem Polyoxyalkylenrest C ist, wobei jeder

Polyoxyalkylenrest A ein mittleres Molgewicht von 600 bis 5500 hat und aus 20 bis 90 Gew.-% Oxyethyleneinheiten und 80 bis 10 Gew.-% Oxypropyleneinheiten besteht,
Polyoxyalkylenrest B ein mittleres Molgewicht von 500 bis 5000 hat und aus 2 bis 19 Gew.-% Oxyethyleneinheiten und 98 bis 81 Gew.-% Oxypropyleneinheiten besteht,
Polyoxyalkylenrest C ein mittleres Molgewicht von 1500 bis 4500 hat und aus Oxypropyleneinheiten besteht, wobei jeweils bis zu 20 Gew.-% der Oxypropyleneinheiten durch Oxybutyleneinheiten ersetzt sein können, und wobei das Molverhältnis der Polyoxyalkylenreste A zu der Summe der Polyoxyalkylenreste B und C 1 : 4 bis 4 : 1 beträgt,
mit der Maßgabe, daß im durchschnittlichen Blockmischpolymerisat mindestens ein Rest R³ vorhanden ist, entspricht,
b einen Wert von 0 bis 10 hat,
a einen Wert von 10 bis 100 hat, wenn b = 0 ist oder einen Wert von 3 bis 70 hat, wenn b > 0 und ≤ 4 ist, oder einen Wert von 3 bis 30 hat, wenn b > 4 ist.

Ein wesentliches Merkmal der vorliegenden Erfindung besteht in Art und Menge der mit dem Polysiloxangerüst verbundenen Polyoxyalkylenreste. Hierbei bestehen folgende Kombinationsmöglichkeiten:

| Möglichkeit | POA-Block A | POA-Block B | POA-Block C |
|---|---|---|---|
| I | + | + | + |
| II | + | + | - |
| III | + | - | + |

Bevorzugt sind die Möglichkeiten I und II.

Der Rest R¹ ist vorzugsweise ein Methylrest.

Der Rest M ist vorzugsweise ein Rest der Formel -(CH₂)₂- oder -(CH₂)₃-.

Vorzugsweise entsprechen die Polyoxyalkylenblöcke R³ der Formel (CₘH₂ₘO-)ₙR⁵, wobei die Indices n und m so gewählt sind, daß die Bedingungen hinsichtlich der Zusammensetzung und des jeweiligen Molgewichtes der verschiedenen Polyoxyalkylenblöcke erfüllt sind, und R⁵ ein Wasserstoffrest, ein Alkylrest mit 1 bis 4 Kohlenstoffatomen, ein Acylrest oder ein -O-CO-NH-R⁶-Rest, wobei R⁶ ein Alkyl- oder Arylrest ist, ist.

Für die Polyoxyalkylenreste gelten die folgenden bevorzugten Bereiche:
- Polyoxyalkylenrest A:: mittleres Molgewicht 1000 bis 4000, Gehalt an Ethylenoxid 30 bis 60, Gehalt an Propylenoxid und gegebenenfalls höheren Alkylenoxiden 70 bis 40,
- Polyoxyalkylenrest B:: mittleres Molgewicht 800 bis 2500, Gehalt an Ethylenoxid 5 bis 15 Gehalt an Propylenoxid und gegebenenfalls höheren Alkylenoxiden 95 bis 85,
- Polyoxyalkylenrest C:: mittleres Molgewicht 1500 bis 2500.

Die Blöcke A, B und C können mehrfach enthalten und an ein gemeinsames durchschnittliches Molekül gebunden sein. Für den Fall, daß die Polyoxyalkylenreste A, B und/oder C mehrfach enthalten sind, müssen die Polyoxyalkylenreste der einzelnen Blocktypen nicht miteinander identisch sein. Die Blöcke A, B oder C müssen nur den jeweiligen Bedingungen für die einzelnen Blocktypen entsprechen.

Vorzugsweise beträgt das Molverhältnis der Polyoxyalkylenreste A zu der Summe der Polyoxyalkylenreste B und C 1 : 3 bis 3 : 1.

Die erfindungsgemäßen Blockmischpolymerisate können nach an sich bekannten Verfahren hergestellt werden. Sind die Polyoxyalkylenblöcke durch eine SiC-Bindung mit dem Polysiloxangerüst verknüpft, addiert man Polyoxyalkylenether von Alkoholen mit einer olefinischen Doppelbindung an eine SiH-Gruppe eines Wasserstoffsiloxans in Gegenwart von Hydrosilylierungskatalysatoren, insbesondere Platinkatalysatoren. Sind die Polyoxyalkylenblöcke durch eine SiOC-Bindung mit dem Polysiloxangerüst verknüpft, setzt man Chlorpolysiloxanylsulfate mit Polyethermonoolen unter Neutralisation der freiwerdenden Mineralsäure um. Es ist auch möglich, die entsprechenden Alkoxysiloxane mit Polyethermonoolen umzuestern. Entsprechende Herstellungsverfahren sind in der eingangs zitierten Literatur beschrieben.

Die erfindungsgemäßen Polysiloxan-Polyoxyalkylen-Blockmischpolymerisate haben hervorragende anwendungstechnische Eigenschaften und können auch in Kombination mit anderen Stabilisatoren des Standes der Technik eingesetzt werden. Die mit diesen Polymerisaten als Schaumstabilisatoren hergestellten Weichschäume zeigen ein hervorragendes Verhältnis von Zellfeinheit zu Luftdurchlässigkeit.

Sie werden bei der Herstellung von PUR-Schäumen in üblichen Mengen eingesetzt. Üblich sind z.B. etwa 0,3 bis 2,5 Gew.-%, bezogen auf Polyol. Vorzugsweise verwendet man 0,8 bis 1,5 Gew.-% Stabilisator.

In den folgenden Beispielen werden die anwendungstechnischen Eigenschaften der erfindungsgemäßen Polymerisate noch näher erläutert.

### Beispiel 1

In einem mit Rührer, Thermometer, Gaseinleitung und Destillationsaufsatz versehenen Kolben werden 201,2 g (= 0,05 Mol) eines Polyethers mit der mittleren Formel

CH₂=CH-CH₂O-(C₂H₄O-)₄₅(C₃H₆O-)₃₄CH₃ (Typ A),

18,4 g (= 0,012 Mol) eines Polyethers mit der mittleren Formel

CH₂=CH-CH₂O-(C₂H₄O-)₁₆(C₃H₆O-)₁₂CH₃ (Typ A),

94,4 g (= 0,062 Mol) eines Polyethers mit der mittleren Formel

CH₂=CH-CH₂O-(C₂H₄O-)₅(C₃H₆O-)₂₁CH₃ (Typ B)

und 450 ml Toluol vorgelegt. Zur azeotropen Trocknung des Polyethergemisches werden 150 ml Toluol unter Stickstoffatmosphäre abdestilliert. Danach wird der Kolben mit einem Rückflußkühler und einem Tropftrichter versehen und durch die Apparatur weiter Stickstoff geleitet. Bei einer Temperatur von 105°C werden 0,2 g einer 10 %igen Lösung von H₂PtCl₆ . 6H₂O in i-Propanol zugesetzt und 5 Min. eingerührt.
Nun werden 80,4 g (= 0,1 Mol SiH) eines Siloxans mit der durchschnittlichen Formel

(CH₃)₃SiO-[(CH₃)₂SiO-]₅₈[(CH₃)HSiO-]₆Si(CH₃)₃

in 20 Min. zugetropft. Man läßt 4 Std. nachreagieren und erreicht einen SiH-Umsatz von 98,3 % (bestimmt über in alkalischem Medium mit n-Butanol abspaltbarem Wasserstoff). Der Ansatz wird mit 2 g Bentonit versetzt, 30 Min. gerührt und filtriert. Anschließend wird das Toluol bei 80°C und 20 mbar abdestilliert. Man erhält ein klares, gelblich gefärbtes Produkt mit einer Viskosität von 1740 mPa . s.

### Beispiel 2

In einem Kolben, der mit Tropftrichter, Rührer, Thermometer, Gaseinleitung und Rückflußkühler versehen ist, werden 251,5 g (= 0,063 Mol) eines Polyethers mit der mittleren Formel

CH₂=CH-CH₂O-(C₂H₄O-)₄₅(C₃H₆O-)₃₄CH₃ (Typ A),

56,6 g (= 0,038 Mol) eines Polyethers mit der mittleren Formel

CH₂=CH-CH₂O-(C₂H₄O-)₅(C₃H₆O-)₂₁CH₃ (Typ B),

37,7 g (= 0,025 Mol) eines Polyethers mit der mittleren Formel

CH₂=CH-CH₂O-(C₂H₄O-)₁(C₃H₆O-)₂₄CH₃ (Typ B)

und 15 mg C₂H₄ . C₅H₅N . PtCl₂ vorgelegt. Durch die Apparatur wird Stickstoff geleitet. Nach Aufheizen auf 120°C werden 65,5 g (= 0,1 Mol SiH) eines Siloxans mit der durchschnittlichen Formel

H(CH₃)₂SiO-[(CH₃)₂SiO-]₈₀[(CH₃)HSiO-)₈Si(CH₃)₂H

zugetropft. Man läßt 2,5 Std. nachreagieren. Der SiH-Umsatz beträgt 99,2 %. Zum Schluß wird das Produkt bei 80°C mit 3,3 g Bentonit versetzt, 30 Min. gerührt und filtriert. Man erhält ein klares, gelblich gefärbtes Produkt, das eine Viskosität von 2180 mPa . s hat.

### Beispiel 3

In einem Kolben, der mit Rührer, Thermometer, Gaseinleitung und Rückflußkühler versehen ist, werden 196,0 g (= 0,05 Mol) eines Polyethers mit der mittleren Formel

CH₂=CH-CH₂O-(C₂H₄O-)₄₂(C₃H₆O-)₃₄COCH₃ (Typ A),

28,1 g (= 0,019 Mol) eines Polyethers mit der mittleren Formel

CH₂=CH-CH₂O-(C₂H₄O-)₁₆(C₃H₆O-)₁₂COCH₃ (Typ A),

84,8 g (= 0,056 Mol) eines Polyethers mit der mittleren Formel

CH₂=CH-CH₂O-(C₂H₄O-)₁(C₃H₆O-)₂₄CH₃ (Typ B)

und 87,7 g (= 0,1 Mol SiH) eines Siloxans mit der durchschnittlichen Formel

(CH₃)₃SiO-[(CH₃)₂SiO-]₁₃₀[(CH₃)HSiO-]₁₂Si(CH₃)₃

vorgelegt. Durch die Apparatur wird Stickstoff geleitet. Nach Aufheizen auf 110°C werden 15 mg cis-[PtCl₂(NH₃)₂] zugesetzt. Nach einer leicht exothermen Reaktion wird der Ansatz klar. Man läßt 4 Std. nachreagieren. Der SiH-Umsatz beträgt 99,8 %. Zum Schluß wird das Produkt bei 80°C mit 2 g Bentonit versetzt, 30 Min. gerührt und filtriert. Man erhält ein klares, gelblich gefärbtes Produkt mit einer Viskosität von 1910 mPa . s.

### Beispiel 4

In einem mit Rührer, Thermometer, Gaseinleitung und Destillationsaufsatz versehenen Kolben werden 188,5 g (= 0,055 Mol) eines Polyethers mit der mittleren Formel

C₄H₉O-(C₂H₄O-)₃₈(C₃H₆O-)₂₉H (Typ A),

59,2 g (= 0,033 Mol) eines Polyethers mit der mittleren Formel

C₄H₉O-(C₂H₄O-)₁₈(C₃H₆O-)₁₆H (Typ A),

30,7 g (= 0,022 Mol) eines Polyethers mit der mittleren Formel

C₄H₉O-(C₂H₄O-)₅(C₃H₆O-)₁₉H (Typ B)

und 1100 ml Toluol vorgelegt. Unter Stickstoffabdeckung werden 150 ml Toluol zur azeotropen Trocknung des Polyethergemisches abdestilliert. Bei 50°C wird der Destillationsaufsatz gegen einen Rückflußkühler ausgetauscht. Anschließend werden 65,8 g (= 0,1 Mol SiX) eines Chlorpolysiloxanylsulfats mit der durchschnittlichen Formel 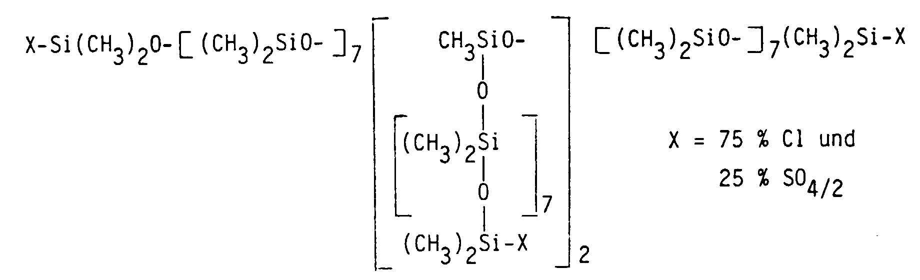 zugesetzt. Dann wird bei 60°C Ammoniakgas eingeleitet bis der Kolbeninhalt ammoniakalisch reagiert. Man läßt noch eine weitere Stunde unter schwachem Einleiten von Ammoniakgas nachreagieren. Anschließend wird das ausgefallene Salz abfiltriert. Danach wird bei 70°C und 20 mbar Toluol abdestilliert. Man erhält ein hellbraunes, fast klares Produkt mit einer Viskosität von 1320 mPa . s.

### Beispiel 5

Entsprechend den Bedingungen von Beispiel 1 werden 12,1 g (= 0,013 Mol) eines Polyethers mit der mittleren Formel

CH₂=CH-CH₂O-(C₂H₄O-)₁₅(C₃H₆O-)₄CH₃ (Typ A),

69,9 g (= 0,05 Mol) eines Polyethers mit der mittleren Formel

CH₂=CH-CH₂O-(C₂H₄O-)₁₂(C₃H₆O-)₁₄H (Typ A)

und 94,3 g (= 0,063 Mol) eines Polyethers mit der mittleren Formel

CH₂=CH-CH₂O-(C₂H₄O-)₁(C₃H₆O-)₂₄CH₃ (Typ B)

mit 87,7 g (= 0,1 Mol SiH) eines Siloxans mit der durchschnittlichen Formel

(CH₃)₃SiO-[(CH₃)₂SiO-]₁₃₀[(CH₃)HSiO-]₁₂Si(CH₃)₃

unter Zusatz von 400 ml Toluol (davon 150 ml zum azeotropen Trocknen) in Gegenwart von 0,16 g einer 10 %igen Lösung von H₂PtCl₆ . 6H₂O in i-Propanol umgesetzt. Der SiH-Umsatz erreicht 97,9 %. Man erhält ein klares, gelblich gefärbtes Produkt mit einer Viskosität von 1480 mPa . s.

### Beispiel 6

Entsprechend den Bedingungen von Beispiel 1 werden 73,6 g (= 0,05 Mol) eines Polyethers mit der mittleren Formel

CH₂=CH-CH₂O-(C₂H₄O-)₁₆(C₃H₆O-)₁₂CH₃ (Typ A),

201,2 g (= 0,05 Mol) eines Polyethers mit der mittleren Formel

CH₂=CH-CH₂O-(C₂H₄O-)₄₅(C₃H₆O-)₃₄CH₃ (Typ A)

und 38,1 g (= 0,025 Mol) eines Polyethers mit der mittleren Formel

CH₂=CH-CH₂O-(C₃H₆O-)₂₅CH₃ (Typ C)

mit 87,7 g (= 0,1 Mol SiH) eines Siloxans mit der durchschnittlichen Formel

(CH₃)₃SiO-[(CH₃)₂SiO-]₁₃₀[(CH₃)HSiO-]₁₂Si(CH₃)₃

unter Zusatz von 470 ml Toluol (davon 150 ml zum azeotropen Trocknen) in Gegenwart von 0,25 g einer 10 %igen Lösung von H₂PtCl₆ . 6H₂O in i-Propanol umgesetzt. Der SiH-Umsatz erreicht 98,9 %. Man erhält ein klares, gelblich gefärbtes Produkt mit einer Viskosität von 1870 mPa . s.

### Beispiel 7

Entsprechend den Bedingungen von Beispiel 1 werden 19,4 g (= 0,0125 Mol) eines Polyethers mit der mittleren Formel

CH₂=CH-CH₂O-(C₂H₄O-)₂₃(C₃H₆O-)₈CH₃ (Typ A),

73,6 g (= 0,05 Mol) eines Polyethers mit der mittleren Formel

CH₂=CH-CH₂O-(C₂H₄O-)₁₆(C₃H₆O-)₁₂CH₃ (Typ A),

75,5 g (= 0,05 Mol) eines Polyethers mit der mittleren Formel

CH₂=CH-CH₂O-(C₂H₄O-)₅(C₃H₆O-)₂₁CH₃ (Typ B)

und 32,1 g (= 0,0125 Mol) eines Polyethers mit der mittleren Formel

CH₂=CH-CH₂O-(C₃H₆O-)₄₃CH₃ (Typ C)

mit 87,7 g (= 0,1 Mol SiH) eines Siloxans mit der durchschnittlichen Formel

(CH₃)₃SiO-[(CH₃)₂SiO-]₁₃₀[(CH₃)HSiO-]₁₂Si(CH₃)₃

unter Zusatz von 400 ml Toluol (davon 150 ml zum azeotropen Trocknen) in Gegenwart von 0,2 g einer 10 %igen Lösung von H₂PtCl₆ . 6H₂O in i-Propanol umgesetzt. Der SiH-Umsatz erreicht 98,4 %. Man erhält ein klares, gelblich gefärbtes Produkt mit einer Viskosität von 1310 mPa . s.

### Beispiel 8

Entsprechend den Bedingungen von Beispiel 1 werden 122,5 g (= 0,031 Mol) eines Polyethers mit der mittleren Formel

CH₂=CH-CH₂O-(C₂H₄O-)₄₂(C₃H₆O-)₃₄COCH₃ (Typ A),

141,6 g (= 0,094 Mol) eines Polyethers mit der mittleren Formel

CH₂=CH-CH₂O-(C₂H₄O-)₅(C₃H₆O-)₂₁CH₃ (Typ B)

mit 87,7 g (= 0,1 Mol SiH) eines Siloxans mit der durchschnittlichen Formel

(CH₃)₃SiO-[(CH₃)₂SiO-]₁₃₀[(CH₃)HSiO-]₁₂Si(CH₃)₃

unter Zusatz von 450 ml Toluol (davon 150 ml zum azeotropen Trocknen) in Gegenwart von 0,2 g einer 10 %igen Lösung von H₂PtCl₆ . 6H₂O in i-Propanol umgesetzt. Der SiH-Umsatz erreicht 96,8 %. Man erhält ein klares, gelblich gefärbtes Produkt mit einer Viskosität von 1165 mPa . s.

### Beispiel 9

### (nicht erfindungsgemäß)

Entsprechend den Bedingungen von Beispiel 1 werden 201,2 g (= 0,05 Mol) eines Polyethers mit der mittleren Formel

CH₂=CH-CH₂O-(C₂H₄O-)₄₅(C₃H₆O-)₃₄CH₃ (Typ A),

und 110,4 g (= 0,075 Mol) eines Polyethers mit der mittleren Formel

CH₂=CH-CH₂O-(C₂H₄O-)₁₆(C₃H₆O-)₁₂CH₃ (Typ A)

mit 110 g (= 0,1 Mol SiH) eines Siloxans mit der durchschnittlichen Formel

(CH₃)₃SiO-[(CH₃)₂SiO-]₉₆[(CH₃)HSiO-]₇Si(CH₃)₃

unter Zusatz von 450 ml Toluol (davon 150 ml zum azeotropen Trocknen) in Gegenwart von 0,3 g einer 10 %igen Lösung von H₂PtCl₆ . 6H₂O in i-Propanol umgesetzt. Der SiH-Umsatz erreicht 98,9 %. Man erhält ein klares, gelblich gefärbtes Produkt mit einer Viskosität von 2620 mPa . s.

### Beispiel 10

### (nicht erfindungsgemäß)

Entsprechend den Bedingungen von Beispiel 1 werden 201,2 g (= 0,05 Mol) eines Polyethers mit der mittleren Formel

CH₂=CH-CH₂O-(C₂H₄O-)₄₅(C₃H₆O-)₃₄CH₃ (Typ A),

73,6 g (= 0,05 Mol) eines Polyethers mit der mittleren Formel

CH₂=CH-CH₂O-(C₂H₄O-)₁₆(C₃H₆O-)₁₂CH₃ (Typ A)

und 24,1 g (= 0,025 Mol) eines Polyethers mit der mittleren Formel

CH₂=CH-CH₂O-(C₂H₄O-)₁₅(C₃H₆O-)₄CH₃ (Typ A)

mit 87,7 g (= 0,1 Mol SiH) eines Siloxans mit der durchschnittlichen Formel

(CH₃)₃SiO-[(CH₃)₂SiO-]₁₃₀[(CH₃)HSiO-]₁₂Si(CH₃)₃

unter Zusatz von 500 ml Toluol (davon 150 ml zum azeotropen Trocknen) in Gegenwart von 0,3 g einer 10 %igen Lösung von H₂PtCl₆ . 6H₂O in i-Propanol umgesetzt. Der SiH-Umsatz erreicht 98,5 %. Man erhält ein klares, gelblich gefärbtes Produkt mit einer Viskosität von 2450 mPa . s.

### Beispiel 11

### (nicht erfindungsgemäß)

Entsprechend den Bedingungen von Beispiel 1 werden 201,2 g (= 0,05 Mol) eines Polyethers mit der mittleren Formel

CH₂=CH-CH₂O-(C₂H₄O-)₄₅(C₃H₆O-)₃₄CH₃ (Typ A),

73,6 g (= 0,05 Mol) eines Polyethers mit der mittleren Formel

CH₂=CH-CH₂O-(C₂H₄O-)₁₆(C₃H₆O-)₁₂CH₃ (Typ A)

und 35 g (= 0,025 Mol) eines Polyethers mit der mittleren Formel

CH₂=CH-CH₂O-(C₂H₄O-)₁₂(C₃H₆O-)₁₄H (Typ A)

mit 80,4 g (= 0,1 Mol SiH) eines Siloxans mit der durchschnittlichen Formel

(CH₃)₃SiO-[(CH₃)₂SiO-]₅₈[(CH₃)HSiO-]₆Si(CH₃)₃

unter Zusatz von 500 ml Toluol (davon 150 ml zum azeotropen Trocknen) in Gegenwart von 0,25 g einer 10 %igen Lösung von H₂PtCl₆ . 6H₂O in i-Propanol umgesetzt. Der SiH-Umsatz erreicht 98,2 %. Man erhält ein klares, gelblich gefärbtes Produkt mit einer Viskosität von 1980 mPa . s.

Die anwendungstechnische Prüfung der hergestellten Schaumstoffstabilisatoren erfolgt mit einer Schaumrezeptur auf folgende Weise:

Jeweils 300 Teile eines handelsüblichen Polyethers zur Herstellung von flexiblen Urethanschaumstoffen, welcher im mittleren Molekül drei Hydroxylgruppen aufweist und ein Molekulargewicht von 3500 hat, werden mit 15 Teilen Wasser, 30 Teilen eines physikalischen Treibmittels, der entsprechenden Menge des zu testenden Schaumstoffstabilisators, 0,33 Teilen Diethylentriamin und 0,6 Teilen Zinnoctoat unter gutem Rühren vermischt. Nach Zugabe von 125 Teilen Toluoldiisocyanat (Isomerengemisch 2,4 und 2,6 im Verhältnis 4 : 1) wird mit einem Glattrührer 7 Sek. bei 3000 U/Min. gerührt und das Gemisch in einen Kasten gegossen. Es entsteht ein feinporiger Schaumstoff, von dem folgende Daten gemessen werden:
1. Das Rücksacken des Schaumstoffes am Ende der Steigphase (in nachfolgender Tabelle mit "Rückfall" angegeben).
2. An einem aus der Schaummitte geschnittenen 10 x 10 x 10 cm großen Würfel wird der Staudruck beim Durchpressen von Luft durch den Probenkörper ermittelt. Je höher der gemessene Staudruck ist, umso schlechter ist die Offenzelligkeit des entstandenen Schaumes.
3. Die Zahl der Zellen pro Zentimeter Schaum werden unter einem Mikroskop ausgezählt.

In der nachfolgenden Tabelle sind jeweils drei Meßwerte für drei verschiedene Konzentrationen im Verhältnis 1,8 : 1,3 : 1,0 sowohl für erfindungsgemäße (Beispiel 1 bis 8) als auch nicht erfindungsgemäße (9 bis 11) Stabilisatoren angegeben.

**Tabelle 1**

| Beispiel | Rückfall | Staudruck | Zellen pro cm |
|---|---|---|---|
| 1 | 0,6/0,7/1,2 | 27/ 17/ 17 | 15/15/15 |
| 2 | 0,9/1,3/1,9 | 20/ 11/ 8 | 16/15/15 |
| 3 | 0,7/0,7/1,4 | 25/ 19/ 16 | 15/15/13 |
| 4 | 1,1/1,5/2,1 | 41/ 28/ 22 | 16/16/14 |
| 5 | 0,5/0,9/1,5 | 300/254/220 | 13/12/12 |
| 6 | 0,6/0,8/2,0 | 25/ 22/ 15 | 13/13/12 |
| 7 | 2,1/2,5/3,3 | 31/ 25/ 22 | 16/15/13 |
| 8 | 3,0/3,2/3,6 | 19/ 09/ 07 | 15/15/15 |
| 9 | 0,8/0,9/1,5 | 45/ 35/ 30 | 12/12/10 |
| 10 | 0,6/0,9/1,4 | 50/ 55/ 65 | 10/08/08 |
| 11 | 0,6/0,8/0,9 | 80/102/125 | 09/08/05 |

Wie aus den anwendungstechnischen Daten hervorgeht, ist es mit den erfindungsgemäß aufgebauten Schaumstoffstabilisatoren möglich, Polyurethanweichschäume mit einer sehr feinen Zellstruktur zu machen, wobei die Schäume aufgrund der Aktivität des Stabilisators nur geringe Rückfälle zeigen.

### Beispiel 12

Ein weiterer Vergleich zweier erfindungsgemäßer Schaumstabilisatoren mit einem Schaumstabilisator gemäß der EP-OS 0 275 563 wird wie folgt durchgeführt:
1. Herstellung der erfindungsgemäßen Stabilisatoren a) und b)
   Stabilisator a)
      Entsprechend den Bedingungen von Beispiel 1 werden 73,6 g (0,05 Mol) eines Polyethers der mittleren Formel

      CH₂=CH-CH₂O-(C₂H₄O-)₁₆(C₃H₆O-)₁₂CH₃

      entsprechend Polyoxyalkylenrest A des Patentanspruchs 1 (Molgewicht 1472),
      125,3 g (0,03125 Mol) eines Polyethers der durchschnittlichen Formel

      CH₂=CH-CH₂O-(C₂H₄O-)₄₅(C₃H₆O-)₃₄H

      entsprechend Polyoxyalkylenrest A des Patentanspruchs 1 (Molgewicht 4010) und
      122,3 g (0,04375 Mol) eines Polyethers der durchschnittlichen Formel

      CH₂=CH-CH₂O-(C₃H₆O-)₄₇CH₃

      entsprechend Polyoxyalkylenrest C des Patentanspruchs 1 (Molgewicht 2798) mit
      80,4 g (0,1 Mol SiH) eines Siloxans der durchschnittlichen Formel

      (CH₃)₃SiO-[(CH₃)₂SiO-]₅₈[(CH₃)HSiO-]₆Si(CH₃)₃

      unter Zusatz von 450 ml Toluol (davon 150 ml zum azeotropen Trocknen) in Gegenwart von 0,25 g einer 10 %igen Lösung von H₂PtCl₆ . 6H₂O in I-Propanol umgesetzt. Der SiH-Umsatz erreicht 99,1 %. Man erhält ein klares, gelblich gefärbtes Produkt mit einer Viskosität von 1950 mPa . s.
   Stabilisator b)
      Entsprechend den Bedingungen von Beispiel 1 werden 73,6 g (0,05 Mol) eines Polyethers der mittleren Formel

      CH₂=CH-CH₂O-(C₂H₄O-)₁₆(C₃H₆O-)₁₂CH₃

      entsprechend Polyoxyalkylenrest A des Patentanspruchs 1 (Molgewicht 1472),
      125,3 g (0,03125 Mol) eines Polyethers der durchschnittlichen Formel

      CH₂=CH-CH₂O-(C₂H₄O-)₄₅(C₃H₆O-)₃₄H

      entsprechend Polyoxyalkylenrest A des Patentanspruchs 1 (Molgewicht 4010) und
      66,6 g (0,04375 Mol) eines Polyethers der durchschnittlichen Formel

      CH₂=CH-CH₂O-(C₃H₆O-)₂₅CH₃

      entsprechend Polyoxyalkylenrest C des Patentanspruchs 1 (Molgewicht 1522) mit
      80,4 g (0,1 Mol SiH) eines Siloxans der durchschnittlichen Formel

      (CH₃)₃SiO-[(CH₃)₂SiO-]₅₈[(CH₃)HSiO-]₆Si(CH₃)₃

      unter Zusatz von 400 ml Toluol (davon 150 ml zum azeotropen Trocknen) in Gegenwart von 0,21 g einer 10 %igen Lösung von H₂PtCl₆ . 6H₂O in i-Propanol umgesetzt. Der SiH-Umsatz erreicht 98,7 %. Man erhält ein klares, gelblich gefärbtes Produkt mit einer Viskosität von 1790 mPa . s.
   2. Herstellung eines Stabilisators c) mit Polyetherblöcken gemäß EP-OS 0 275 563
      Stabilisator c)
         In gleicher Weise wie bei der Herstellung der Stabilisatoren a) und b) werden
         73,6 g (0,05 Mol) eines Polyethers der mittleren Formel

         CH₂=CH-CH₂O-(C₂H₄O-)₁₆(C₃H₆O-)₁₂CH₃

         entsprechend Polyoxyalkylenrest A des Patentanspruchs 1 (Molgewicht 1472),
         125,3 g (0,03125 Mol) eines Polyethers der durchschnittlichen Formel

         CH₂=CH-CH₂O-(C₂H₄O-)₄₅(C₃H₆O-)₃₄H

         entsprechend Polyoxyalkylenrest A des Patentanspruchs 1 (Molgewicht 4010) und im Gegensatz zu den beiden vorgenannten Stabilisatoren 51,4 g (0,04375 Mol) eines Polyethers der durchschnittlichen Formel

         CH₂=CH-CH₂O-(C₃H₆O-)₁₉CH₃

         mit einem Molgewicht von 1174 mit
         80,4 g (0,1 Mol SiH) eines Siloxans der durchschnittlichen Formel

         (CH₃)₃SiO-[(CH₃)₂SiO-]₅₈[(CH₃)HSiO-]₆Si(CH₃)₃

         unter Zusatz von 400 ml Toluol (davon 150 ml zum azeotropen Trocknen) in Gegenwart von 0,20 g einer 10 %igen Lösung von H₂PtCl₆ . 6H₂O in i-Propanol umgesetzt. Der SiH-Umsatz erreicht 98,2 %. Man erhält ein klares, gelblich gefärbtes Produkt mit einer Viskosität von 1730 mPa . s.

Der Unterschied des Vergleichsstabilisators c) liegt also im niedrigen Molgewicht des dritten Polyethers. In der folgenden Tabelle wird gezeigt, welche Eigenschaftsänderungen beim Vergleich der beiden erfindungsgemäßen Stabilisatoren a) und b) mit dem Stabilisator c) entsprechend dem Stand der Technik zu beobachten sind. Dabei erfolgt die Verschäumung analog dem Beispiel 11, mit dem Unterschied, daß das Polyol ein Molgewicht von 3000 aufweist, 10 Gew.-Teile Treibmittel und 114 Gew.-Teile Toluoldiisocyanat zur Verschäumung eingesetzt werden.

**Tabelle 2**

| Stabilisator | Rückfall | Staudruck | Zellen pro cm |
|---|---|---|---|
| a erfindungsgemäß | 1,0/1,2/2,6 | 31/22/17 | 15/14/14 |
| b erfindungsgemäß | 0,8/0,9/1,4 | 95/92/81 | 14/12/12 |
| c erf .gemäß | 0,7/0,9/1,2 | 139/138/122 | 14/11/9 |

Der Tabelle 2 ist zu entnehmen, daß das Eigenschaftsprofil der mit den erfindungsgemäßen Stabilisatoren a) und b) erhaltenen Schäume besser als das Eigenschaftsprofil des mit dem Vergleichsstabilisator c) erhaltenen Schaumes ist.

## Patentansprüche

1. Polysiloxan-Polyoxyalkylen-Blockmischpolymerisat mit unterschiedlichen Polyoxyalkylenblöcken im durchschnittlichen Molekül, gekennzeichnet durch die allgemeine Formel 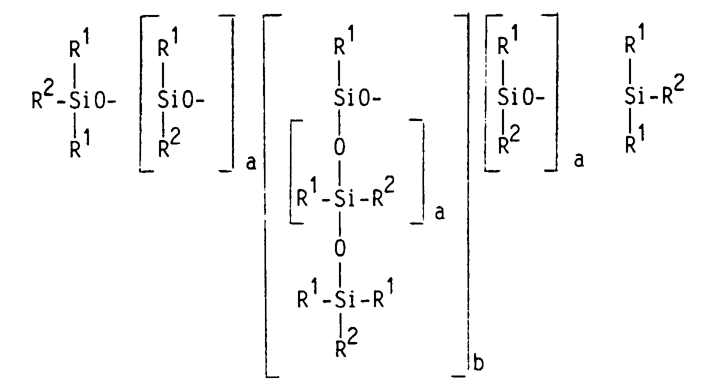 wobei
R¹ ein Alkylrest mit 1 bis 4 Kohlenstoffatomen oder ein Phenylrest ist, jedoch mindestens 90 % der Reste R¹ Methylreste sind,
R² die Bedeutung des Restes R¹ oder des Restes -M-R³ hat, wobei
M ein zweiwertiger Rest der Formel
-R⁴ ₓO-
ist, in dem
R⁴ ein zweiwertiger Alkylenrest, der auch verzweigt sein kann, ist und
x einen Wert von 0 oder 1 hat,
R³ ein Gemisch von
(1) mindestens einem Polyoxyalkylenrest A und
(2) mindestens einem Polyoxyalkylenrest B und/oder
(3) mindestens einem Polyoxyalkylenrest C ist, wobei jeder
Polyoxyalkylenrest A ein mittleres Molgewicht von 600 bis 5500 hat und aus 20 bis 90 Gew.-% Oxyethyleneinheiten und 80 bis 10 Gew.-% Oxypropyleneinheiten besteht,
Polyoxyalkylenrest B ein mittleres Molgewicht von 500 bis 5000 hat und aus 2 bis 19 Gew.-% Oxyethyleneinheiten und 98 bis 81 Gew.-% Oxypropyleneinheiten besteht,
Polyoxyalkylenrest C ein mittleres Molgewicht von 1500 bis 4500 hat und aus Oxypropyleneinheiten besteht,
wobei jeweils bis zu 20 Gew.-% der Oxypropyleneinheiten durch Oxybutyleneinheiten ersetzt sein können, und wobei das Molverhältnis der Polyoxyalkylenreste A zu der Summe der Polyoxyalkylenreste B und C 1 : 4 bis 4 : 1 beträgt,
mit der Maßgabe, daß im durchschnittlichen Blockmischpolymerisat mindestens ein Rest R³ vorhanden ist, entspricht,
b einen Wert von 0 bis 10 hat,
a einen Wert von 10 bis 100 hat, wenn b = 0 ist oder einen Wert von 3 bis 70 hat, wenn b > 0 und ≤ 4 ist, oder einen Wert von 3 bis 30 hat, wenn b > 4 ist.

2. Blockmischpolymerisat nach Anspruch 1, dadurch gekennzeichnet, daß die Polyoxyalkylenblöcke R³ der Formel (CₘH₂ₘO-)ₙR⁵ entsprechen, wobei die Indices n und m so gewählt sind, daß die Bedingungen hinsichtlich der Zusammensetzung und des jeweiligen Molgewichtes der verschiedenen Polyoxyalkylenblöcke erfüllt sind, und R⁵ ein Wasserstoffrest, ein Alkylrest mit 1 bis 4 Kohlenstoffatomen, ein Acylrest oder ein -O-CO-NH-R⁶-Rest, wobei R⁶ ein Alkyl- oder Arylrest ist, ist.

## Claims

1. Polysiloxane-polyoxyalkylene block copolymer containing different polyoxyalkylene blocks in the average molecule, characterized by the general formula 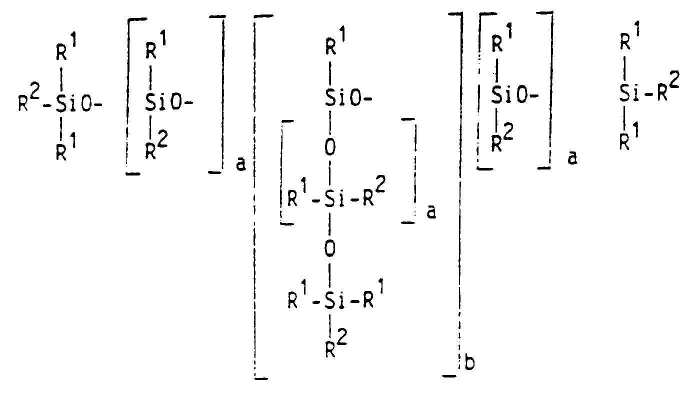 where
R¹ is an alkyl radical having from 1 to 4 carbon atoms or a phenyl radical, but at least 90% of the radicals R¹ are methyl radicals,
R² is as defined for R¹ or is a radical -M-R³, where M is a divalent radical of the formula
-R⁴ ₓO-
where
R⁴ is a divalent alkylene radical which can also be branched and x is 0 or 1,
R³ is a mixture of
(1) at least one polyoxyalkylene radical A and
(2) at least one polyoxyalkylene radical B and/or
(3) at least one polyoxyalkylene radical C,
where each
polyoxyalkylene radical A has a mean molecular weight of from 600 to 5500 and comprises from 20 to 90% by weight of oxyethylene units and from 80 to 10% by weight of oxypropylene units,
polyoxyalkylene radical B has a mean molecular weight of from 500 to 5000 and comprises from 2 to 19% by weight of oxyethylene units and from 98 to 81% by weight of oxypropylene units,
polyoxyalkylene radical C has a mean molecular weight of from 1500 to 4500 and comprises oxypropylene units,
where in each case up to 20% by weight of the oxypropylene units can be replaced by oxybutylene units, and where the molar ratio of the polyoxyalkylene radicals A to the sum of the polyoxyalkylene radicals B and C is from 1 : 4 to 4 : 1,
with the proviso that at least one radical R³ is present in the average block copolymer,
b is from 0 to 10,
a is from 10 to 100 when b = 0 or
is from 3 to 70 when b > 0 and ≤ 4, or
is from 3 to 30 when b > 4.

2. Block copolymer according to Claim 1, characterized in that the polyoxyalkylene blocks R³ correspond to the formula (CₘH₂ₘO-)ₙR⁵, where the indices n and m are selected in such a way that the conditions in respect of the composition and the respective molecular weight of the various polyoxyalkylene blocks are met, and R⁵ is a hydrogen radical, an alkyl radical having from 1 to 4 carbon atoms, an acyl radical or a -O-CO-NH-R⁶ radical, where R⁶ is an alkyl or aryl radical.

## Revendications

1. Copolymère séquencé de polysiloxane-polyoxyalkylène contenant différentes séquences de polyoxyalkylène dans la molécule moyenne, caractérisé par la formule générale 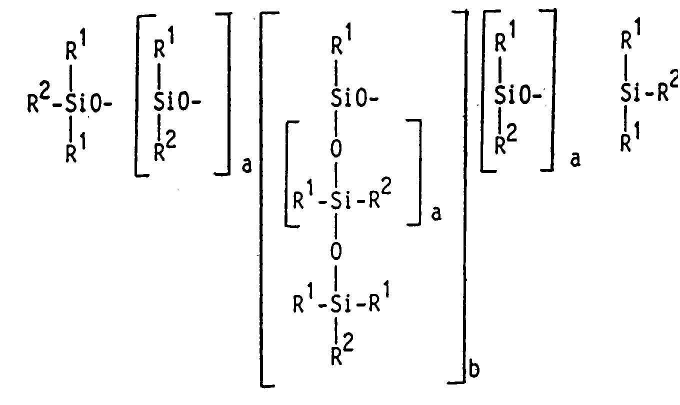 dans laquelle
R¹ est un reste alkyle ayant de 1 à 4 atomes de carbone ou un reste phényle, au moins 90 % des restes R¹ signifiant toutefois le reste méthyle,
R² a la signification du reste R¹ ou du reste -M-R³, où
M est un reste bivalent répondant à la formule
-R⁴ ₓO-
dans laquelle
R⁴ est un reste alkylène bivalent qui peut aussi être ramifié, et
x vaut 0 ou 1,
R³ correspond à un mélange de :
(1) au moins un reste polyoxyalkylène A et
(2) au moins un reste polyoxyalkylène B et/ou
(3) au moins un reste polyoxyalkylène C,
chaque reste polyoxyalkylène A ayant un poids moléculaire moyen de 600 à 5 500 et étant formé de 20 à 90 % en poids d'unités oxyéthylène et 80 à 10 % en poids d'unités oxypropylène,
chaque reste polyoxyalkylène B ayant un poids moléculaire moyen de 500 à 5 000 et étant formé de 2 à 19 % en poids d'unités oxyéthylène et 98 à 81 % en poids d'unités oxypropylène,
chaque reste polyoxyalkylène C ayant un poids moléculaire moyen de 1 500 à 4 500 et étant formé d'unités oxypropylène,
jusqu'à 20 % en poids des unités oxypropylène pouvant être remplacées à chaque fois par des unités oxybutylène, et le rapport molaire des restes polyoxyalkylène A à la somme des restes polyoxyalkylène B et C étant de 1 : 4 à 4 : 1, avec la condition qu'au moins un reste R³ soit présent dans le copolymère séquencé moyen,
b vaut de 0 à 10,
a vaut de 10 à 100 quand b = 0, ou
vaut de 3 à 70 quand b > 0 et ≤ 4, ou
vaut de 3 à 30 quand b > 4.

2. Copolymère séquencé selon la revendication 1, caractérisé en ce que les séquences de polyoxyalkylène R³ correspondent à la formule (CₘH₂ₘO-)ₙR⁵, dans laquelle les indices n et m sont choisis de telle façon que les conditions concernant la composition et le poids moléculaire respectif des différentes séquences de polyoxyalkylène soient remplies, et R⁵ est un reste d'hydrogène, un reste alkyle ayant de 1 à 4 atomes de carbone, un reste acyle ou un reste -O-CO-NH-R⁶, où R⁶ est un reste alkyle ou un reste aryle.
